# EUROPEAN PATENT APPLICATION

(11) **EP 1 282 042 A2**
(43) Date of publication of application: **05.02.2003**
(21) Application number: 02254823.4
(22) Date of filing: 09.07.2002
(51) Int. Cl.: G06F 11/36

(54) **Advertisement selection criteria debugging process**

(30) Priority: 29.07.2001 US 917021
(71) Applicant: Hewlett-Packard Company, Palo Alto, California 94304-1185 (US)
(72) Inventor: Newsome, Mark R., Corvallis, OR 97330 (US)
(74) Representative: Jackson, Richard Eric

(57) **Abstract**

Advertisements placed on a Web page are placed according to selection criteria (step 210) relating to and describing the advertisement in terms of consumers to whom it is directed. The debugging process and system overlays the selection criteria on the advertisement to (step 250) allow manual debugging of the criteria. By changing the selection criteria (step 250) assigned to an advertisement, a marketing person manually changes to whom that advertisement is directed.

## Description

### Technical Field

The present invention relates generally to electronic advertising. More particularly, the present invention relates to Internet advertising.

### Background of the Invention

Along with increased Internet usage, Internet advertising has experienced a tremendous increase as well. Internet users have come to expect free access to information and other products in return for being exposed to advertising. Typically, this advertising takes the form of hyper-links of advertisement graphics on the World Wide Web page being viewed by the consumer. Additionally, the advertisements can be transmitted directly to the individual via e-mails.

The effectiveness of advertisements corresponds with their size, how long consumers view them, and their relevance to that particular consumer. Manufacturers and service providers, therefore, must focus their advertisements in order to maximize their advertisement dollars. In other words, the advertiser must make sure that the right person is viewing the advertisement in order for the advertisement to be effective. If a woman is shown advertisements for products or services meant for men, then the advertiser has wasted the money required to produce and display those advertisements.

Advertisements are typically selected, for display on a Web page, by an advertisement selection engine. These engines determine, using consumer data regarding the individual, which advertisements might be more suitable for that particular individual. The advertisement engines can also use postal zip codes and other regional criteria to tailor the advertisements that are transmitted on Web pages read by individuals resident in those zip codes.

In order to determine if the advertisement selection engine is performing properly, someone has to check the advertisements being used for certain criteria. This is typically done on a random basis since not every advertisement can be checked for accuracy. However, this still requires a great deal of time and manpower. In order to check how an advertisement was selected, people must sift through volumes of log files, produced by the selection engine, and go through lines of code and selection rules. The code may not even be available. There is a resulting unforeseen need for a way to debug advertisement content that has been dynamically placed on a Web page in order to determine that the advertisements are being used effectively.

### Summary of the Invention

The present invention encompasses a process for debugging advertisement selection criteria used by an advertisement selection engine that places an advertisement on a page. In the preferred embodiment, the page is a World Wide Web page comprising information content that is transmitted to a consumer.

The advertisement debugging process comprises displaying the advertisement on the page and, in the preferred embodiment, displaying the selection criteria for the advertisement over the advertisement. Alternate embodiments display the selection criteria and advertisement in different locations on the page.

Once the selection criteria are displayed, the person performing the debugging process has the ability to change the weighting factor for any of the criteria. This provides the ability to more properly direct advertisements to the consumers for whom they are intended.

### Brief Description of the Drawings

FIG. 1 shows a flowchart of an advertisement selection engine of the present invention.
FIG. 2 shows a flowchart of the advertisement debugging process of the present invention.
FIG. 3 shows a typical output of the advertisement debugging process of the present invention.
FIG. 4 shows a block diagram of a World Wide Web server in accordance with the present invention.

### Detailed Description of the Preferred Embodiment

The advertisement selection debugger process of the present invention provides advertisers with the ability to easily determine the selection criteria used for each advertisement on a Web page. This information provides an advertising agency or someone in a marketing role with the ability to determine why a particular advertisement was focused on a particular individual or region. If there is an error in the focus of the advertisement, the agency or marketing person can now change the selection criteria to properly match the advertisement.

While the following description of the present invention is described in terms of Hyper-Text Mark-up Language (HTML), the present invention encompasses other forms of languages. For example, other embodiments use Extensible Markup Language (XML) and Wireless Mark-up Language (WML).

When a Web page is accessed over the Internet, they typically appear with a banner advertisement. Banner advertisements vary considerably in appearance and subject matter. They are typically a combination of graphics and text that display a product or service. Some banner advertisements may include animation for added emphasis.

All banner advertisements share one basic function: by clicking on the advertisement with the cursor or arrow, the Internet browser takes a consumer to the advertiser's Web site. This is possible since banner advertisements are relatively simple pieces of HTML code. The code instructs a Web server to bring up a particular Web page when the consumer clicks on the particular graphic. This is the process used by electronic commerce companies to make money.

Like print advertisements, banner advertisements come in a variety of shapes and sizes that are specified by the Internet Advertising Bureau (IAB). The IAB specifies different banner sizes that are grouped according to pixel dimension. For example, a full banner advertisement is 486 x 60 pixels, a half banner is 234 x 60 pixels, a vertical banner is 120 x 240 pixels. These banner sizes are for illustration purposes only. There are many different banner advertisement sizes and the present invention encompasses banner advertisements of any size.

Internet advertisers generally hope that a banner advertisement will accomplish one of two tasks. Ideally, a consumer visiting a publisher's Web site (the site that posts the advertisement) will click on the advertisement and go to the advertiser's Web site. In this case, the banner advertisement has brought the advertiser a visitor they would not have had otherwise. The banner advertisement is a real success if the visitor not only comes to the Web site but also buys something from the advertiser.

Failing a click-through by the visitor, advertisers hope that the visitor to the publisher's site will see the banner advertisement and remember it. This could mean that the visitor consciously notes the content of the banner advertisement and decides to visit the advertiser's site in the future or that the visitor only peripherally picks up on the advertisement but is made aware of the advertiser's product or service. This is also referred to in the art as branding.

There are many criteria used by advertisers to measure the success of an advertisement. Some of these are the clicks/click-throughs, page views, click through rate, and the cost per sale.

The clicks/click-throughs are the number of consumers who click on the banner advertisement linking to the advertiser's Web site. Publisher's often sell banner advertisement space based on a cost-per-click basis.

The page view, also referred to as page impressions, is the number of times that a particular Web page has been requested from the server. Advertisers are interested in page views because they indicate the number of visitors who could have seen the banner advertisement. Although the page view does not measure the effectiveness of a branding campaign, they do measure how many visitors were exposed to it. The most common way to sell banner advertisement space is the cost-per-thousand impression (CPM - where M is the Roman numeral for one thousand).

The click-through rate (CTR) describes the ratio of page views to clicks. It is typically expressed as the percentage of total visitors to a particular page who actually clicked on the banner advertisement. The typical click-through-rate is less than one percent.

The cost-per sale is the measure of how much advertising money is spent on making one sale. Advertisers use different means to calculate this, depending on the advertisement and the product or service. Many advertisers keep track of visitor activity using Internet cookies. This technology allows that site to combine shopping history with information about how the visitor originally came to the Web site.

A typical advertisement is generated using HTML by combining the HTML tag for a link to the desired Web site with the HTML tag for an image. For example, one such advertisement might look like:
<a href = "http://www.instant-delivery.com"> <img src= "gif/banner-ad-static.gif"></a>

In this example, the link component is <a href = "http://www.instant-delivery.com"> and the graphic tag component is <img src= "gif/banner-ad-static.gif">. The visitor clicking on the advertisement would be taken to the Web site "www.instant-delivery.com". The graphic tag is comprised of a URL location of the graphic image. This tells the visitor's browser to load the image posted at that particular URL.

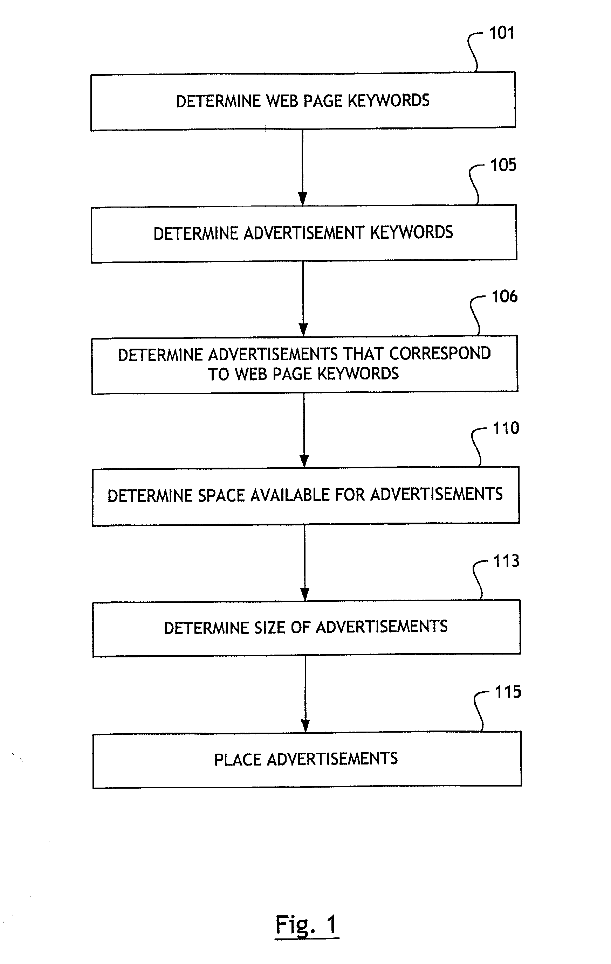

One process used to place banner advertisements on Web pages is an advertisement selection engine. One such advertisement selection engine uses different criteria to select what advertisements are placed on a particular Web page. One such advertisement selection engine is illustrated in FIG. 1 and is discussed subsequently.

When a Web page is generated and registered with Web directories, it has a listing of "keywords" that are embedded in the HTML that defines the page. As is well known in the art, the <HEAD> tag may be comprised of a <META> tag that lists these keywords. The keywords are then available for search engines and advertisement selection engines to access and determine the purpose of the Web page.

Also embedded in the HTML that defines the Web page may be data that defines a certain type of person or group of people to whom the page is targeted. This data can be in the <META> tag or elsewhere in the HTML for that page. For example, the data might indicated that the page would more probably be read by males over 45 years of age that live in the Northeast at a certain postal zip code. The advertisement selection engine can access this data and use it to place advertisements on this Web page that correspond to that data.

Since the advertisement is also defined using HTML, it can also have keywords, categories, and other selection criteria embedded in the <META> tags, <HEADER>, comment fields, or other locations. These keywords, categories, or other selection criteria, in the preferred embodiment, indicate to whom the advertisement is focused. An advertisement may be focused towards a certain sex, a region of the country, a certain postal zip code, a profession, or any other defining criteria. For example, one advertisement has keywords in the <META> tag that indicates it is more likely to be relevant to pregnant women under 30 who live in the zip code 90210.

In another embodiment, the selection criteria list embedded in the advertisement's code shows the weight each category played in the selection process (e.g., 0 = none while 10 = strong match). These rankings could be used to determine how much to charge an advertiser. Additional codes could appear in the selection criteria list such as a unique advertisement identification code. This code could be used to pull up the full selection history of a particular advertisement.

FIG. 1 illustrates an advertisement selection engine of the present invention. The process begins with the selection engine determining the keywords of the Web page by scanning the keywords embedded in the code defining the page (step 101). The selection engine then goes through the keywords of advertisements in an advertisement pool (step 105) to find advertisements that substantially correspond to the information content (step 106). The advertisement pool, in the preferred embodiment, is stored on the Web server. Alternate embodiments store the advertisement pool on other servers that are accessible over some network, such as the Internet.

Once advertisements are found that correspond to the information content, the advertisement selection engine determines the amount and size of the space available around the information content (step 110) in order to find a corresponding advertisement that fits. The selection engine then analyzes the sizes of the corresponding advertisements (step 113) to determine which will fit in the space available. The corresponding advertisements of the proper size are then placed on the Web page (step 115) by inserting their defining code into the Web page defining code.

In the preferred embodiment, the Web page may be requested by a consumer through an information retrieval service such as HEWLETT-PACKARD's INSTANT-DELIVERY™ service. Such a service provides consumers with the ability to request certain Internet content to be downloaded to the consumer's client software resident on the consumer's personal computer or other such computing device (e.g., personal digital assistants).

When the consumer purchases or downloads the client software, they may enter certain data regarding themselves as a condition for getting the software. For example, prior to downloading the client software, the service provider might ask the consumer for their profession, postal zip code, income, sex, age, or any other such data. This data is stored as selection criteria in a database on the service provider's Web server. In an alternate embodiment, the consumer's data is stored in a cookie on the consumer's computing device that is accessible to the service provider's Web server.

In yet another embodiment, the service provider's Web server can read data regarding the consumer off the consumer's computer or other computing device. This data may include the type of computer equipment used by the consumer such as the computer itself, monitor, printer, and any peripherals that have data stored on the computer hard drive. The Web server's advertisement selection engine can then tailor advertisements sent to the consumer that relate to some type of computer equipment that is related to the equipment the consumer already owns.

With the information delivery service, the consumer sets the schedule and content to be downloaded to the client software. The Web server then goes to each requested Web site and downloads the information content. The Web server then determines the selection criteria for the individual requesting the information content. The criteria is used to choose from the pool of advertisements before placing them on the page and sending the page to the consumer.

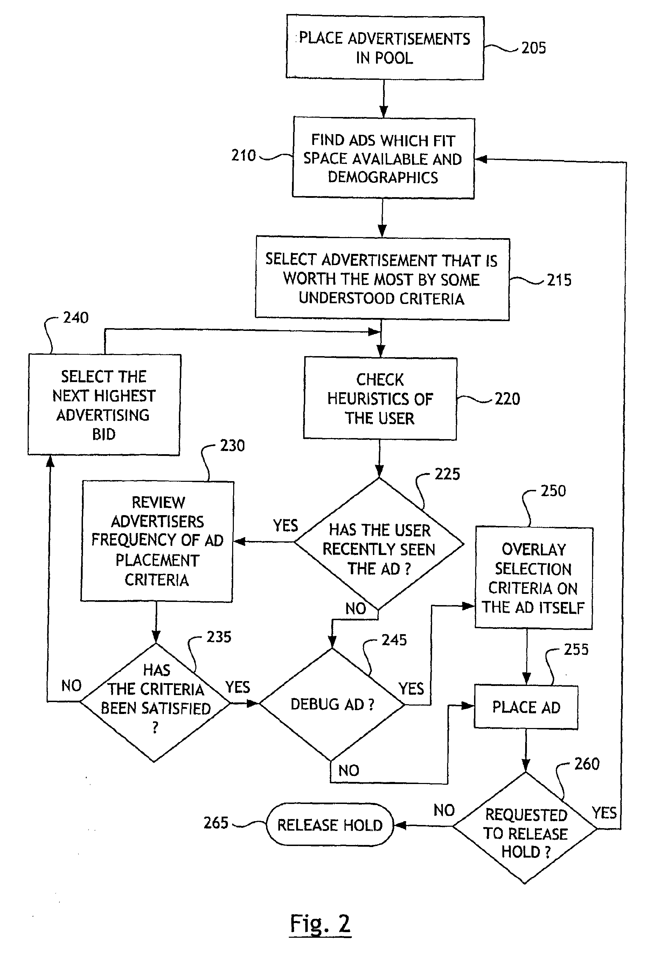

FIG. 2 illustrates an advertisement selection engine that incorporates the advertisement debugger process of the present invention. Advertisements are placed in the advertising pool (step 205) for storage. As described above, this pool may be on the Web server or another location that is accessible by the Web server.

The advertisements that fit the space available on information content page and also fit the demographics are chosen from this pool (step 210). The demographics in the preferred embodiment are regarding the consumer requesting the information content In an alternate embodiment, the demographics are of the information content itself.

From the advertisements selected in the last step (step 210), the advertisement that is the most valuable according to some predefined criteria is selected (step 215). In the preferred embodiment, the criteria relates to which advertiser is paying the most for the advertisement space. Other embodiments use other forms of criteria such as which advertiser pays its bills on time or which advertiser has a more closely related product to the information content. Other embodiments use other forms of predetermined criteria.

The heuristics of the consumer are checked (step 220). This step involves checking the consumer's history of downloads to determine which advertisements have been viewed, in what information content the consumer is most interested, the consumer's personal data such as income, profession, and sex. Other embodiments use other forms of heuristic data.

If the consumer has seen the advertisement before (step 225), the advertiser's rules for frequency of advertisement placement are checked (step 230). Most advertisers have placement criteria that determines how often they wish their advertisements exposed to a particular consumer so that the consumer is not overwhelmed by one advertisement. This may have a detrimental effect on the consumer's desire to purchase that advertiser's product or service.

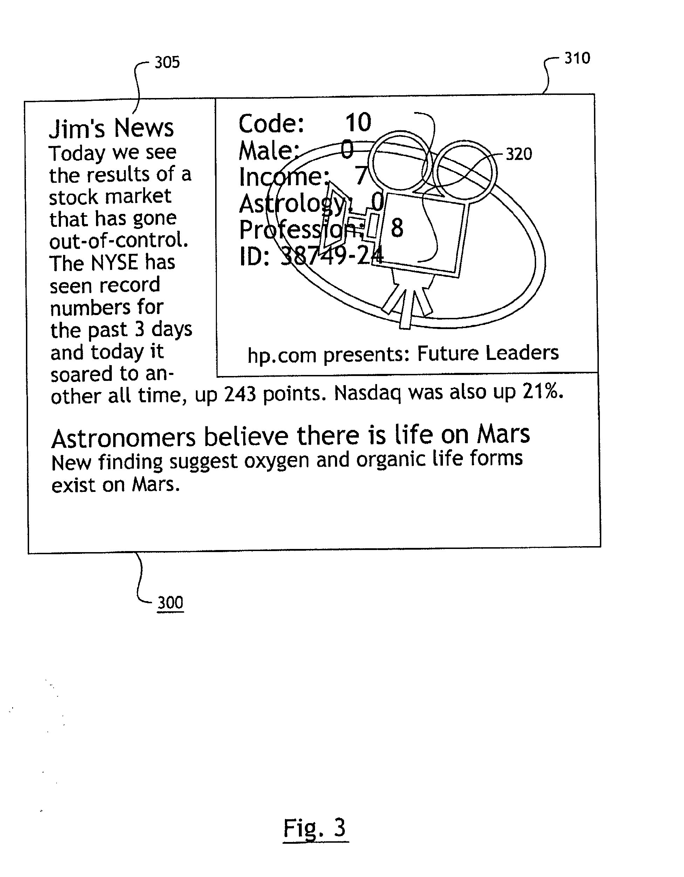

If the frequency of advertisement placement criteria has not been met (step 235), another advertisement is selected that has the next highest advertising bid (step 240). If the consumer has not recently seen the advertisement (step 225) or the frequency of advertisement placement criteria has been met (step 235), an option is given to debug the advertisement (step 245) to make sure it is an appropriate advertisement focused on the consumer's profile. The debugging of the advertisement is discussed subsequently in reference to FIG. 3.

If it is desired to debug the advertisement, the selection criteria is overlaid on the advertisement or otherwise displayed (step 250) to the marketing person or other person performing the debugging. The marketing person or person performing the debugging then places the advertisement after the debugging operation is complete (step 255).

If there is advertising space left (step 260) after placement of the last advertisement, the process goes back to finding advertisements that fit the available space and demographics (step 210). If no space remains after placement of the last advertisement (step 260), the document is delivered to the consumer (step 265).

FIG. 3 illustrates the output of the debugging process of the present invention. When a marketing person or other person wishing to debug a certain advertisement wishes to view the selection criteria for that particular advertisement, they enter the debugging mode on the Web server or other computer coupled to the advertisement pool. The display on the monitor shows the Web page (300) with the information content requested by the consumer (305). The advertisement (310) that was specified by the advertisement selection engine is also shown as it would be displayed to the consumer except in a muted or low contrast watermark form.

The selection criteria (320) used by the advertisement selection engine is displayed over the watermarked advertisement. This provides the marketing person or other person wishing to check the accuracy of the advertisement selection criteria with both the advertisement and the selection criteria in one display.

An alternate embodiment of the debugging process of the present invention displays only the selection criteria for the advertisement and not the advertisement. Still another embodiment displays the advertisement in a reduced size format.

The selection criteria (320), in the preferred embodiment, is comprised of the technology area of the advertisement, the postal zip code of consumers who would be most interested in the advertisement, the sex, the income, the astrology sign, and the profession of the relevant consumer. Each of these criteria is assigned a weighting number that lets the marketing person know how relevant that criterion was in its selection. In the preferred embodiment, the weighting factor has a range of 0 to 10 with 0 having no relevance and 10 having a strong relevance in the selection process.

Alternate embodiments use other forms of weighting. One embodiment uses alpha-characters. Another embodiment uses a different range of numbers.

The advertisement identification code of the selection criteria (320) provides an easy way for both the computer and the human operator to track various advertisements. Certain advertisers may be assigned a predetermined range of advertisement identification codes for easy identification later and also for easy categorization by the computer processes.

Using the advertisement debugging process of the present invention, the marketing person has easy access to the information used by the advertisement selection process to select the advertisement. The selection criteria can now be changed, if desired, to better suit the advertisement if the marketing person believes the criteria is in error or needs fine-tuning. For example, the marketing person might want to give the income of the consumer more weight or reduce the weight of the profession. The marketing person can also add another criterion that might be relevant to the selection of the advertisement.

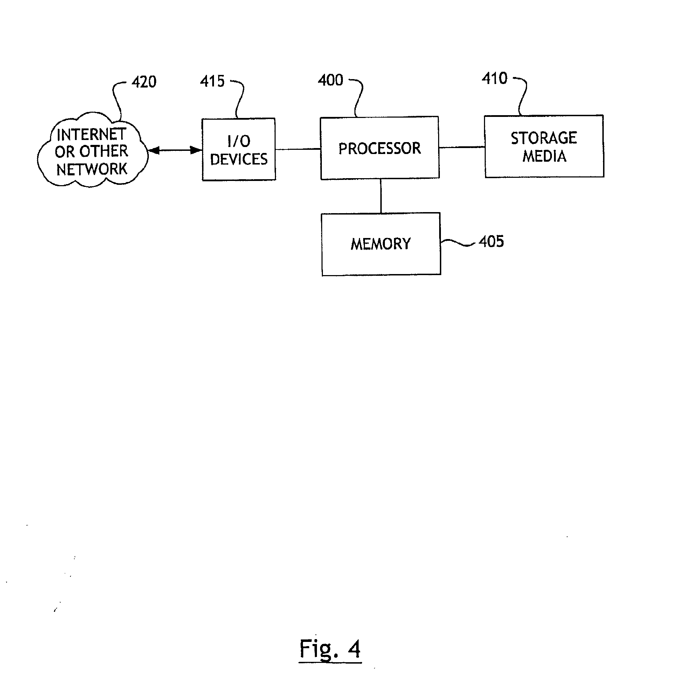

FIG. 4 illustrates a block diagram of a World Wide Web server of the present invention. The server is comprised of a processor (400) for controlling the server and running the processes of the present invention. The memory (405), coupled to the processor (400), is responsible for temporarily holding data for access by the processor (400) and various computers and mobile devices that are coupled to server over the Internet or other network. Storage media (410), coupled to the processor (400) can include hard drives, floppy drives, and any other media for storing data in a more permanent fashion. This storage media (410), in the preferred embodiment, stores the advertisement pool of the present invention.

The Input/Output (I/O) devices (415) are used to couple the server to the Internet or any other network (420) coupled to the server. The I/O devices (415) include modems, Ethernet cards, and any other devices required to couple the server to a network. The I/O devices (415) also include displays, monitors, keyboards, and other devices required by operators who interact with the server.

Numerous modifications and variations of the present invention are possible in light of the above teachings. It is therefore to be understood that within the scope of the appended claims, the invention may be practiced otherwise than as specifically described herein.

## Claims

1. A method for debugging advertisement selection criteria used by an advertisement selection engine for placing an advertisement on a page, the method comprising the steps of:
displaying the advertisement on the page (step 250); and
displaying the selection criteria for the advertisement on the page (step 250).

2. The method of claim 1 wherein the selection criteria is displayed on top of the advertisement.

3. The method of claim 2 wherein the advertisement is comprised of a reduced contrast appearance.

4. The method of claim 1 wherein the page is a World Wide Web page that is defined by hypertext mark-up language.

5. The method of claim 1 and further including the step of transmitting, to a consumer, the page with the advertisement (step 265).

6. The method of claim 1 wherein the selection criteria comprises a technology associated with the advertisement, a geographic area associated with the advertisement, and a sex of a consumer at which the advertisement is directed.

7. The method of claim 1 and further including the step of displaying a weighting factor (320) associated with each of the selection criteria .

8. The method of claim 7 wherein the weighting factor is a range of numbers from 0 to 10 such that 0 indicates that particular selection criteria had no impact on the advertisement's selection and 10 indicates that particular selection criteria had a strong impact on the advertisement's selection.

9. The method of claim 7 wherein the weighting factor is a range of alpha-characters.

10. A method for debugging advertisement selection criteria for placing an advertisement on a page comprising information content intended for a consumer, the method comprising the steps of:
determining which advertisements, of a plurality of advertisements in an advertising pool, fit available space on the page (step 205);
determining which advertisements, of the advertisements that fit available space on the page, are demographically correct (step 205);
selecting an advertisement from the demographically correct advertisements that has a highest value (step 215);
checking heuristics of the consumer (step 220);
determining if the advertisement has previously been transmitted to the consumer (step 225);
if the advertisement has not been previously transmitted to the consumer, determining if debugging of the advertisement is desired (step 245);
if the advertisement is not to be debugged, placing the advertisement on the page (step 255);
if the advertisement is to be debugged, displaying the advertisement selection criteria on the page with the advertisement (step 250); and
if the advertisement is to be debugged, debugging the advertisement selection criteria (step 250).

11. The method of claim 10 and further including the step of storing the plurality of advertisements in an advertising pool (step 205).

12. The method of claim 10 and further including the steps of:
placing the advertisement on the page after debugging the selection criteria (step 255);
determining if there is advertising space still available (step 260); and
if no advertising space is available, transmitting the page to the consumer (step 265).

13. The method of claim 10 and further including the steps of:
if the advertisement has been previously transmitted to the consumer, determining a frequency of advertisement placement criteria for the advertisement (step 230); and
if the frequency of advertisement placement criteria is not satisfied, selecting another advertisement having a next highest value (step 240).

14. The method of claim 10 wherein the advertisement selection criteria comprises a technology associated with the advertisement, a geographic area associated with the advertisement, and a sex of a consumer at which the advertisement is directed and each of the selection criteria comprises a weighting factor.

15. The method of claim 14 wherein the step of debugging the advertisement selection criteria comprises changing at least one advertisement selection criterion (step 250).

16. The method of claim 14 wherein the step of debugging the advertisement selection criteria comprises changing at least one weighting factor (step 250).

17. A system for debugging advertisement selection criteria for placing an advertisement on a page comprising information content intended for a consumer, the system comprising:
a processor (400) that controls processes for debugging the advertisement selection criteria;
memory (405) coupled to the processor (400), the memory storing advertisement selection criteria used by the processor;
storage media (410) coupled to the processor (400), the storage media storing the page of information content, a plurality of advertisements, and a plurality of advertisement selection criteria associated with each advertisement; and
input/output apparatuses (415) coupled to the processor (400), the input/output apparatuses comprising means for transmitting the page comprising the information content and the advertisement.

18. The system of claim 17 wherein the storage media (410) comprises means for storing consumer profiles.

19. The system of claim 17 wherein the input/output apparatuses (415) comprise an Internet interface that couples the system to the Internet.

20. The system of claim 17 wherein the storage media (410) comprises a disk drive for storing the page of information content, the plurality of advertisements, and the plurality of advertisement selection criteria associated with each advertisement.
